# EUROPEAN PATENT SPECIFICATION

(11) **EP 0 623 201 B1**
(45) Date of publication and mention of the grant of the patent: **16.04.1997**
(21) Application number: 93901987.3
(22) Date of filing: 21.01.1993
(51) Int. Cl.: F24C 3/12

(54) **AUTOMATIC CONTROL STOVE**
KOCHHERD MIT AUTOMATISCHER REGELUNG
CUISINIERE A COMMANDE AUTOMATIQUE

(30) Priority: 21.01.1992 BR 9200168
(43) Date of publication of application: 09.11.1994
(73) Proprietor: TEIXEIRA FILHO, Fabio, Lopes, 05462-060-Sao Paulo (BR); Andreoni, Marcio Di Lorenzi, 02022-060-Sao Paulo (BR)
(72) Inventor: TEIXEIRA FILHO, Fabio, Lopes, 05462-060-Sao Paulo (BR); Andreoni, Marcio Di Lorenzi, 02022-060-Sao Paulo (BR)
(74) Representative: Geyer, Werner, Dr.-Ing.
(86) International application number: PCT/BR93/00003
(87) International publication number: WO 93/14350

(56) References cited:
- EP-A- 0 173 855
- US-A- 3 889 875
- US-A- 4 681 084
- PATENT ABSTRACTS OF JAPAN vol. 10, no. 301 (M-525)(2357) 14 October 1986 & JP-A-61 114 016 (MATSUSHITA) 31 May 1986

## Description

This report describes a stove with automatic control, more specifically an automatic and intelligent stove, providing the equipment a more practical, secure, rational and efficient use.

People know that standard stoves present basically a burner set linked to a gas conducter network and also a flame driver operated by electric flash.

Actually, technological improvements have been very simple and inefficient in terms of its specific function, that is, heating food.

All the technological improvements applied to stoves, besides short, limits to the starting operation and not specifically to heat the conditioner containers of food.

Even the most technologically advanced stove still presents inopportunities in terms of safety, economy and operational rationalization, and do not guarantee the sensorial aspects (smell, visual, texture, color, taste) and food nourishment value.

The idea to use a computer to automate the procedures of food preparation was conceived by J. Carl Goodhouse in the patent number US-A-3889,875 on 17th of June, 1975, which set up automatically the cooking time in terms of weight, cooking degree (well done, medium, rare) and a constant for each meat type, always considering a fixed cooking temperature.

One aspect of the current invention is to supply the stove with an automatic control that brings high security to the user avoiding gas exhaust, improper operation or the burning of food during its preparation.

Another aspect of the current invention is to supply the stove with an automatic control that limits its use to qualified person, avoiding non-authorized ones, as children for instance, operate any of the stove functions.

One more aspect of this invention is to supply the stove with an automatic programming control, allowing a rational, fast and ordered use of the equipment. The aspects mentioned above and others besides the benefits of this invention will be obtained with the stove supply fit with an automatic control, which is the basic flame operating system, by resting a pan over the oven or burner grid, works together with support subsystems sequence integrated to a basic system that warns all the stove operational variants (temperature, time, dehydration degree, vapour percentage and food or ingredients weight), and the support subsystems arranged by: flame sensor system; timer; a checking "weight" system of food to be prepared; a nearness sensor system and an identifier of utensils and person authorized to operate the stove; a sound and visual alarm system connected to the other subsystems status; an auxiliar electrical feeding system (no break); an oven pre-heating system; a water vapour supplier and regulator for the oven, a system to measure the temperature of the oven; a variable programming system (time x temperature x vapour x dehydration degree) to prepare the best food, a system based on bar-code scanning system that programs automatically the stove with variable parameters of (time x temperature x vapour dehydration degree); an automatic operating system of external ventilator and light focus over the burner table.

Following, the current invention will be more understandable with detailed description referring to the appended drawings where:

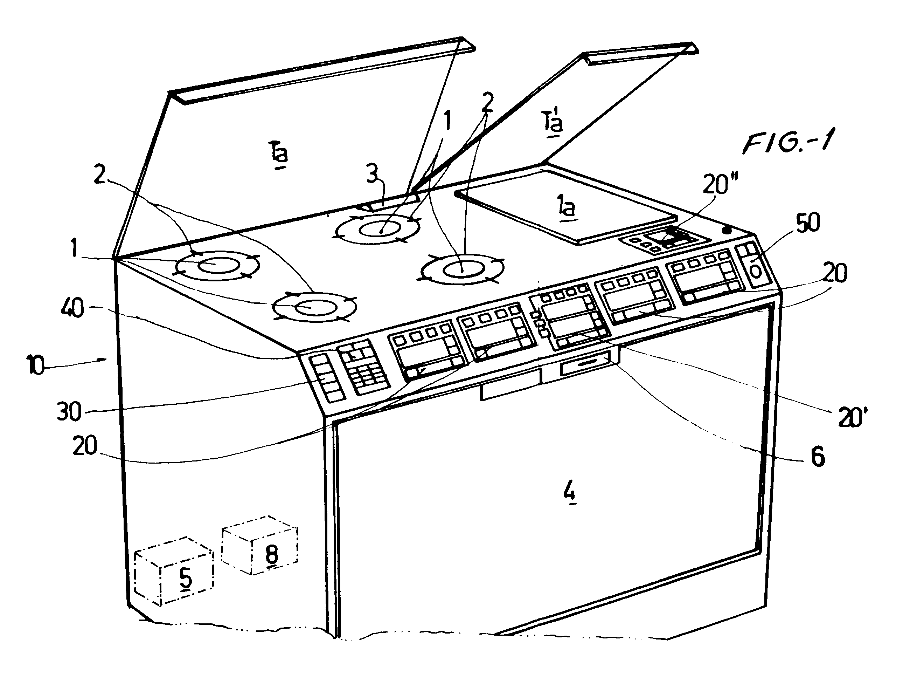

Figure 1 represents schematically a partial cut view perspective of the automatic control stove at issue;

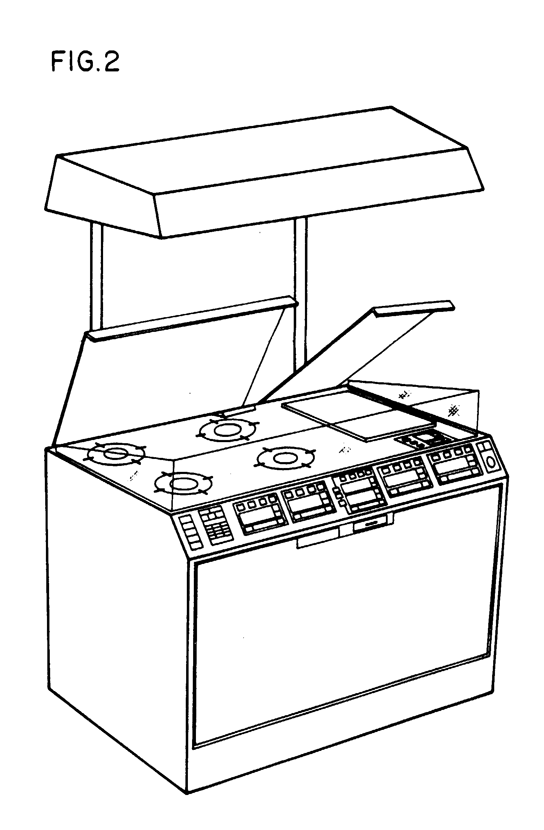

Figure 2 represents schematically a perspective view of the referred stove, with external ventilator and a glass shield in raised position;

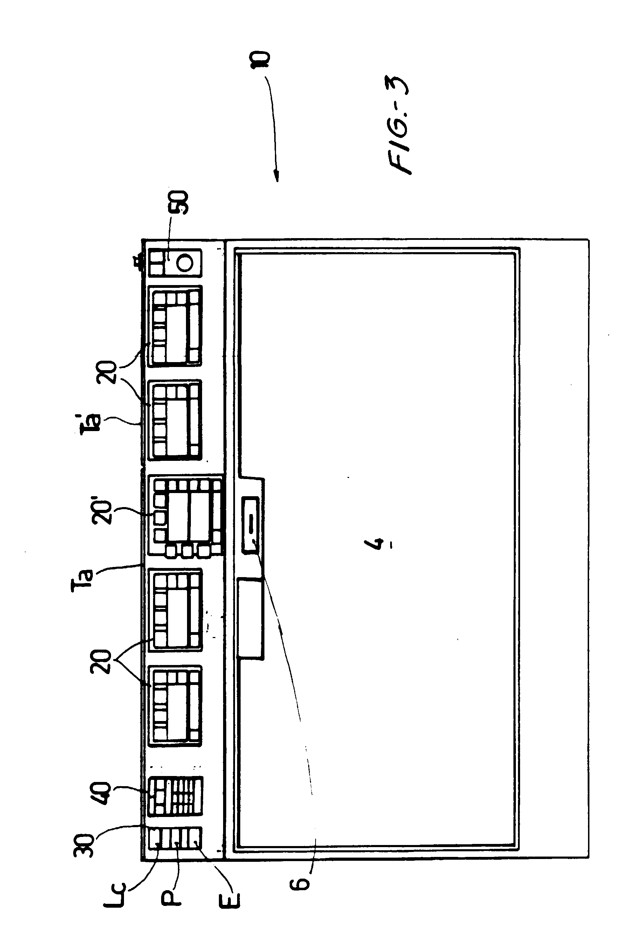

Figure 3 represents the frontal view of the automatic control stove;
Figures 4 and 4a represent respectively frontal views of the individual control panel of the oven and each stove burners with automatic control;
Figure 4b represents the frontal view of the individual control panel for the plate of the stove table;
Figure 4c represents the frontal view of the numeric keyboard of time, temperature, dehydration degree of the oven foods programmer;

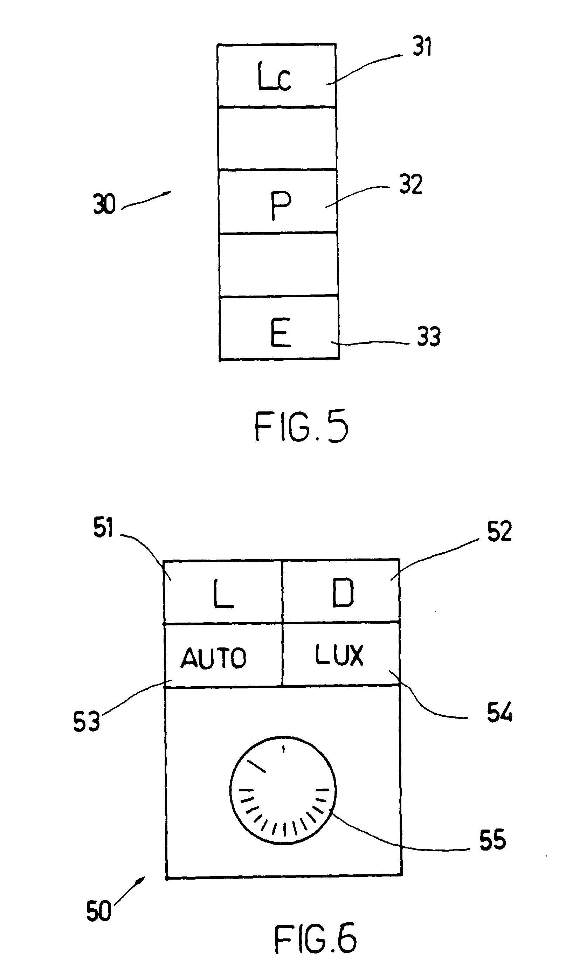

Figure 5 represents the "master" control panel;
Figure 6 represents the operating external ventilator and the light focus over the burners table; and

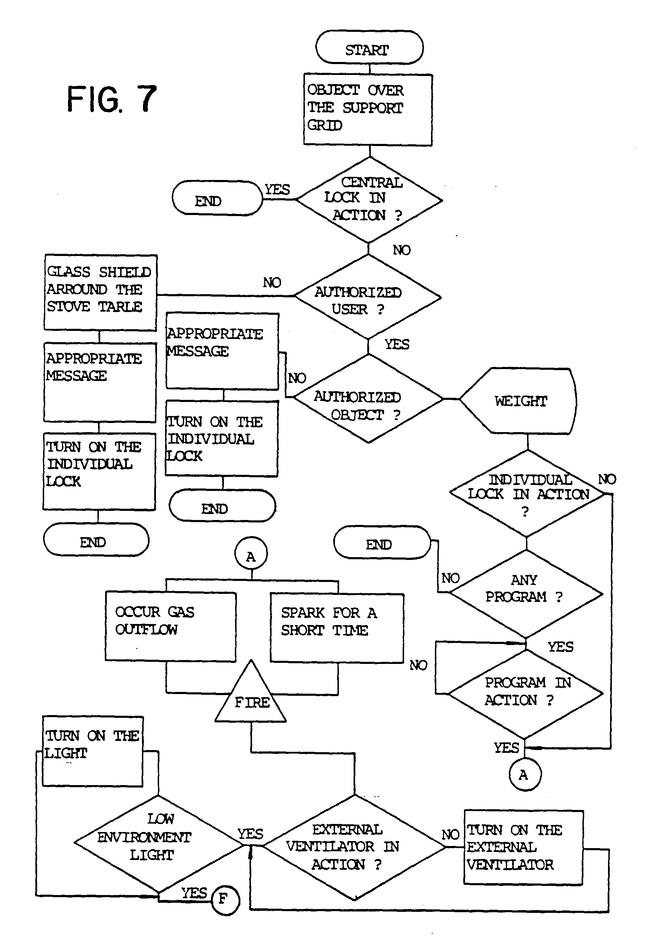

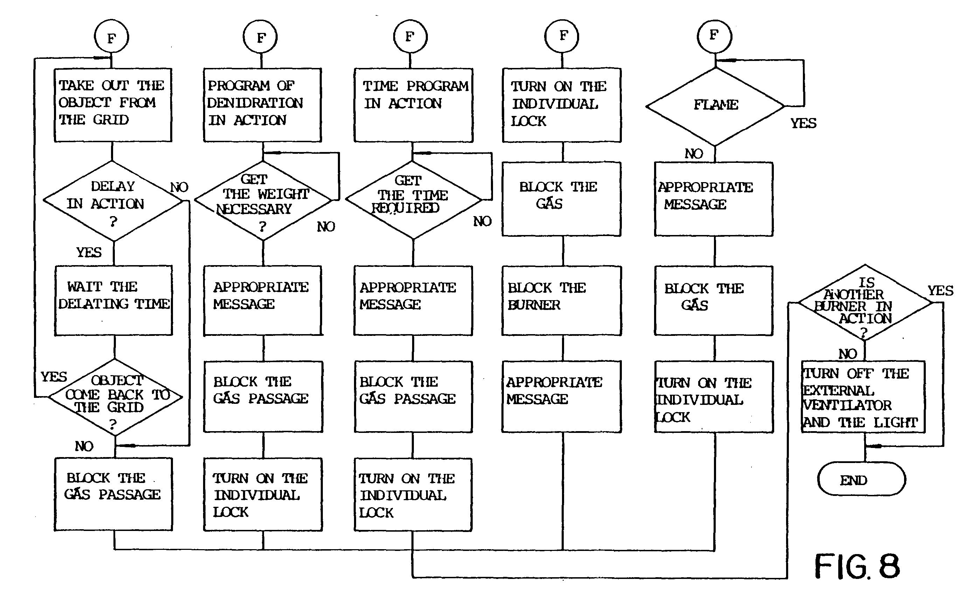

Figures 7 and 8 represent, respectivelly, the functional block diyagram of the inactivity operating condition of the burners.

According to illustrations above, the automatic control stove, object of the current invention, has the following features a structured cupboard 10, which, in its supeiror horizon surface is set the burner table 1, each of them set under a support grid 2, where the pan or another appropriate utensil will rest for the food preparation.

Over the burner table 1 can be foreseen additionally a plate la to grill directly the food.

Over the burners table 1, there is a frequency radio receiver 3 that detects the nearness and identifies the correspondent transmitter of the frequency radio, not illustared, fit to the utensil or utensil set appropriate for use over the stove.

In front of the structured cupboard 10 is supplied a control panel series 20, 20' and 20", individual for each burner 1 for the oven burner 4 and for the plate 1a.

All set defined above is electro-electronically linked to a central program circuit 5 that is responsible for all the stove automatic operations.

This control centre 5, defined by the program circuit, is responsible for all the electro-electronical linking of all systems and functions, which in turn, operates electro-mechanic devices that operates the stove partially or completely.

The stove 10 with automatic control is provided with a nearness detector composed of a frequency radio system, divided in transmitter and receiver 3, the receiver 3 is set in the stove 10, more specifically over the burner table 1 and the transmitter is fit, in a removable or not form, next to the pan cable or proper utensils for preparing the food or in the removable form, for instance, as a bracelet to be used around the user wrist or as a necklace to be used around the neck, or, set in the user apron.

So the receptor 3 receives frequency radio signals, unique and distinct for each transmitter device and delivers or not the automatic ignition of the burner over which the pan is rested. The delivery will take place always when the system recognizes concomitantly the user transmitter or the pan devices when over the burner grid required to operate. If it occurs lack of recognization of the user transmitter 'device, the system simply does not deliver the burners ignition and if you try to operate it inadvertently, a glass shield will appear around the stove table, for security. When the transmitter is set in the pan cable or similar, it receives amianthus protection resistent to heat, water, soup and/or impact.

The frequency radio system is calibrated to act in a sphere of action at most 1 meter distance, so, above this measure the receiver 3 does not note the transmitter nearness.

The transmitter devices mentioned have a microchip that have a crystal that polarize when in contact to a certain power of electro-magnetic waves changing into battery.

A direct current geared is used to operate a radio micro font wave, that carry one unique code for that device, that is taken and identified by the stove. It is the stove itself that moves the devices to deliver frequency radio waves that are, partially, absorbed by transmitter devices to change in sufficient direct current (d.d.p.) to deliver back another frequency radio that have an unique code for each transmitter, identified by the system.

There is a valve system responsible by the gas passage and its outflow, individual for each burner 1.

This system is composed of two tubes with windows, each one built-in, the internal one is movable and the external one is set, so, spinning one tube over the other, we have windows completely overlaid occuring the most gas outflow; and when this coincidence does not occur, the gas exit is completely sealed, being the intermediate phase responsible by gas outflow graduation (flame intensity).

This system is manipulated by the control centre 5 through an electric engine or a solenoid (not illustrated).

We have the stove flame 10 graduation through an operating device composed of two keys 21 and 21', with + and - symbols, they are counterparts, and this operating device is connected to the electric engine of the valve system, promoting an increase or decrease in the gas intensity and naturally the flame, the graduation is set visually by LEDs indicative.

Each support grid 2 of the burners and oven 4 is unique and is connected to the balance system, where a detector device of dough or cargo cell, coupled to the referred support grid 2, determines the exact "weight" of the utensil rested over the grid.

This balance system is responsible to start all the automatic operating process of the burner 1 flame, as well as is responsible by the flame extinction, when the utensile leaves the support grid 2.

Each unique support grid 2 is removable to make easy the stove cleaning 10.

The automatic control stove 10 is supplied also with a battery 8, that further an auxiliar power feeding "no break", that starts the automatic operation when occurs the lack of energy.

The stove 10 presents also a flame F sensor that works like a security device, that detects the presence of lack of flame, if the flame of one burner 1 switches off, the flame sensor sends a signal to the control centre and this orders the valve system to stop automatically the gas supply to the respective burner 1.

While the gas supply is suspended, an illuminated alarm is outlined in the individual control panel 20 and an alarm is sounded (beep tone or voice synthesizer). Afterwards, the control centre activates automatically the individual lock L.

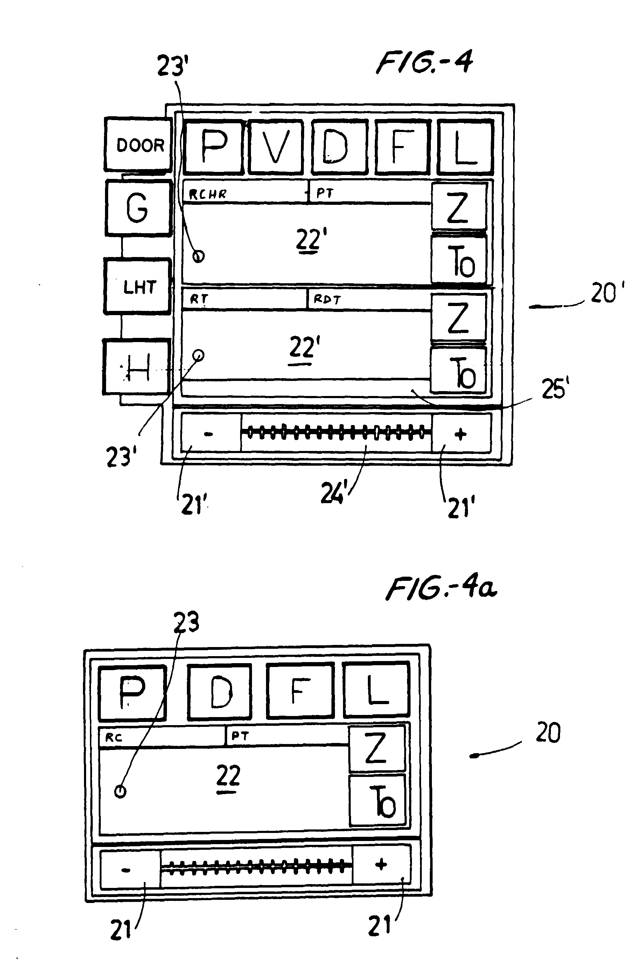

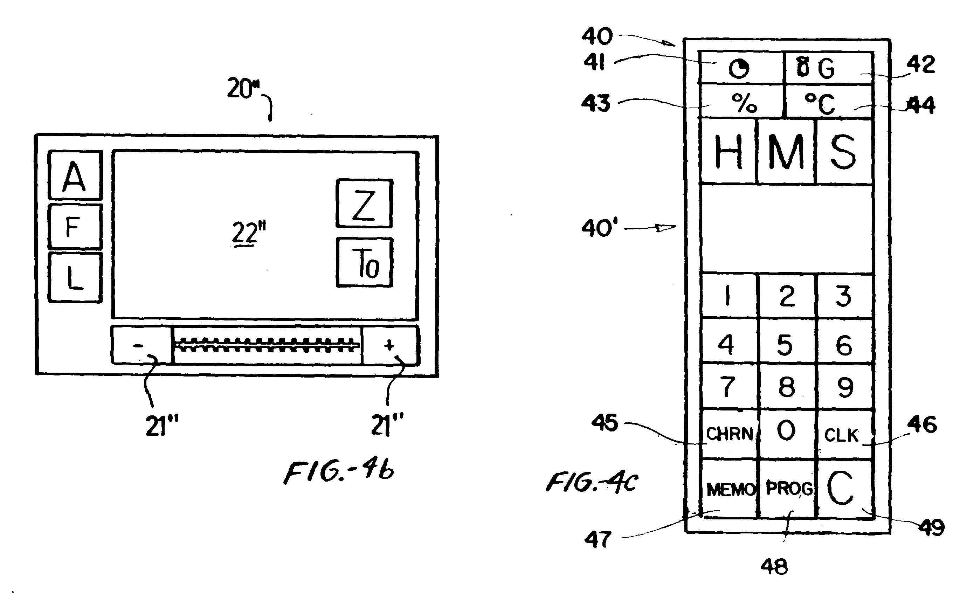

The individual lock L has its operating button set on each individual control panel 20 and 20', illutrated in the figures 4 and 4a.

Basically, each individual control panel 20 and 20' is composed of a digital visor 22 and 22' to balance checking with zero Z and totallizer (To) buttons. In this individual panel 20 and 20', besides promotes individual lock L and under programming P buttons, zero Z and totallizer (To) buttons of the digital display 22 and 22', besides vapour button V, in the case 20' (oven panel), presents an illuminated symbol F linked to the flame sensor, an operating button "under programming" P and a delay button D, and this is responsible to operate a re-read of time that allow the handling of the pan outside the grid 2, without switch off the burner 1.

Similarly, the master control panel 30 is connected to the control centre 5 of the stove, set in its inner side, that is an appropriate place.

The individual lock, operated by a key L of the individual control panel 20 and 20' is a system that does not allow the flame occurence when the weight is resting over the grid 2 of the burner 1.

To rest the pan with the food already prepared, over the grid 2 of the burner 1 without the flame presence, simply activate the individual lock key L.

This system connected to the command centre can start the electric engine, already mentioned, and then operate the valve system in order to switch off the flame, as soon the lock L is activated, or in "weight" presence, the burner flame does not occur.

The central lock hinders the electric feeding of the gas stopping completely the stove operation 10. This system operated by a key Lc set in the control panel 30, hinders the gas passage by a pressure measuring device and lower the top Ta and Ta' of the stove, following, occurs the inhibition of the network electrical feeding and the alternative electrical feeding (no break system) 8, and both operations are ordered by control centre 5.

The pressure measuring device, not illustred, has the function to outline decreasing gas pressure in the entrance tube of the valves system (main tube), activating the illuminated P key of the master control panel 30, indicating the imminent need to change the vessel, or outlining problems in the street gas feeding.

A measurer device of gas amount that remains in the vessel (if the stove has GLP vessel), makes the system deny or not a programming using any of the burners, ready to start. If the gas in the vessel is not sufficient, the illuminated key P of the master control panel will switch on and a beep tone is sounded (or a voice synthesizer message) will notify the user the need to change the vessel before starting the programming.

This measurer device consists of information extrated of measurer pressure device set in the valves systems entrance (main tube) and an analytical balance set below the gas vessel, that reveal, for instance, when a load vessel, 13k (commercial standard) is 5k, or if it is close to empty. Arranging these two information smooth the decision system if there is or not sufficient gas to the required programming set by the user.

The pressure measurer device can also hinder the gas passage through on solenoid valve before it reaches the valve system. Such function is activated by the central lock which Lc key is also set in the master control panel 30.

The alarms are divided in sound and visual that work in different ways. As the following description: - flame presence with gas outflow in the burner 1 the F key in the individual control panel 20, 20' and 20" is switched on, in the lack of flame with gas outflow in the burner 1, the F key is flashing for 10 seconds, while a sound alarm or a voice synthesizer message is sounded; - in the lack of commercial power feeding occurs the "no break" system entrance, switched on the illuminated symbol E of the master control panel 30 and a beep tone or a voice synthetizer message is sounded twice; - when occurs a decrease in the gas pressure, the illuminated symbol P of the master control panel 30 is switched on, a beep tone or a voice synthesizer message is sounded three times, when using the delayer, the illuminated key D is switched on of the individual control panel 20, 20' and 20", a beep tone or a voice synthesizer message is sounded only once; - at the end of the pre-setting cooking an illuminated P key (timer) is flashing four times and a beep tone or a voice synthesizer message is sounded twice.

The oven 4 has a pre-heating H system that allows, with the oven completely empty or the balance zeroed, that is activating the flame for a certain period, allowing the oven pre-heating before it is effectively in use. Such pre-heating system is activated by H key set in the individual panel of the oven control 20'.

The individual oven panel 20' only varies of the burners 1 individual panels 20 because have one more checking weight key 22' (for the second grid), plus a set of zero Z and totallizer (To) keys; on internal light command key LHT, one pre-heating H system control key and a grill key G responsible for the heating of the oven 4 internal rotary spit, the vapour V key indicates the oven is using water vapour to prepare the food and also the key DOOR, responsible for the electrical operating of the oven open door 4.

The pre-heating system can be de-activated any time when the oven 4 door is opened. When the pre-heating H key is activated the delay D key is inhibited.

The pre-heating system also activates an internal oven ventilator.

Inside the oven 4 there is a thermometer responsible for checking the temperature and can be read-out through liquid crystal key 22' of the oven 20' individual panel. In the same panel 20', the flame intensity determiner keys 21 ( + and - ) or obtain it in a more accurate way, digitally, by the panel with numeric keyboard 40, that is a programmer device of time, temperature, dehydration degree and vapour percentage.

The analogical temperature programming of the oven 4 is obtained following the orientation of the scale previously recorded to the LEDs 24', flame intensity set in the individual control panel of the oven 20'. The temperature digital programming is obtained via programming by numeric keyboard 40.

The individual panel of the oven 20'offers the following information to a more accurate control of the oven internal temperature.

The RdT (Required Temperature) is the one you want the oven gets for a best food preparation. The RdT can be programmed via digital programming or analogical way.

The RT (Real Temperature) is the oven internal temperature measurement, taking seconds by seconds. The oven 4 is activated when an oven utensil is rest over one of the grid and when its door is completely closed, since the referred utensil or its user is authorized to use it, that is, they have the respective transmitters of code via radio frequency.

When the conditions mentioned above are filled there will be besides the flame automatically operating, the internal ventilator automatic operating.

The oven 4 has a switch in its door, that connected to the control centre 5 is responsible to limit the flame activation until the total closing of the oven door. The internal ventilator mentioned above is responsible not only to deliver the gas accumulation as well as avoid the dish impregnation of smell, when two dishes or more are heated at the same time, making easy the oven internal cleaning, because the exhausting avoids the accumulation of smoke and dripping from food preparation.

The oven 4 can be, alternatively, divided in two distinct compartments (upper and lower), and can in this case, operate different programmings in each one. The oven 4 has its burner 1 switched off automatically when the open door, save that, you only open the door for checking, so, in this case is necessary to activate the delay D key that will keep the flame on for a short period of time. After this interval, if the door is not shut, the flame will extinguish and only the individual lock L will be activated of the respective individual control 20' panel. The oven door is completely open automatically activating the DOOR key of the oven individual panel 20 or only run for manual open through a pressure brake.

The timer function is obtained using only one programmer device. This programmer device is: a numeric keyboard 40 (figure 4c), with visor for the user visualization, with this visor (above it), we have the following keys: timer 41, temperature programmer 44, dehydration programmer 42 and a vapour percent programmer 43.

Besides, there is a key referring to the chronometer (CHRN) 45, that allows to measure the required time of the flame in any burner. So the user will know the right time for cooking doing the preparation of his receipts. The function is activated by the flame sensor of the first burner to be operated, after starting the (CHRN) 45 key. The chronometer lock, when the individual lock L is switched on.

There is also a key referred to the clock (CLK) 46 that updates the current hour that is being displayed in the digital visor while the device is not being used. For the digital programming of the oven internal temperature, we use a device with numeric keyboard 40 activating the key C 44; we determine, through keyboard, the required temperature that must vary from 60° to 300°C, the chosen temperature will appear in the "display" when we activate the key (PROG) 48, your choice will disappear from the numeric keyboard "display" 40 that will return the current hour and will be changed to the "display" of oven individual panel 20' in the reserved blank RdT (Required Temperature). Now the oven 4 will automatically heat its (RT) (Real Temperature) until level with RdT (Required Temperature) that you finished to programming.

To set the current hour, is only to activate the CLK key 46 of the clock. When this occurs, the "display" will flash (or switch on or off) . Set the watch activating the key H of hour and the correspondign digit to the period. The same way for M minutes and S seconds.

Re-activating again the CLK key, the programming hour is set stopping to flash. This operation finish, the programming of current hour.

The chronometer is activated when we wish to determine the ideal time of the flame exposition until obtain the best result during a cooking recipe that is being prepared. Chronometring the time we take note when we want to repeat such recipe, using the same time (this time programmed via timer) 41 to get the same result (the same quality is obtained).

To do so, activate the (CHRN) key 45 of the device with numeric keyboard 40 and then the key P that indicates "under programming" of the individual control command 20, 20' and 20" of the burner required to use. When the F flame key (indicating the presence of flame in the burner 1, activate the chronometer that is set in the display itself of the individual control 20, 20' and 20" of that burner 1, in the reserved space to RC. When the time required by the user to its recipes is achieved, the key L indicates individual lock or removal of the pan over the grid will lock the chronometer, showing in the display the chosen time. The duping (Ta) is raised every time the system is under operation and is lowered over the burners 1 every time the central lock Lc of the control master panel 30 is activated.

The top is divided in two (Ta) and (Ta') one for the burner 1 and the other for the plate la over the stove 10. The top (Ta') of the plate la has a distinguished activation, according to the description below (figure 4b).

The plate 1a, differently the other burners 1 activated automatically with the "weight" over the grid 2 by an authorized person or utensil won't use any utensil because the food to be heated goes straight on the plate la.

In this situation, the delay D key of the individual control panel 20" is changed by the activation A key, responsible to deliver gas and electrical flash that will provoke combustion under the plate la. Such combustion and its respective flame will be confirmed by the flame sensor illuminating the F key of the individual control panel 20". The plate does not have timer function (that in the other panel is indicated by "P"), but keeps the individual lock L function. To switch off the flame under the plate la, activate again the key A of the panel 20" that will stop the gas feeding. The flame F detector key would extinguish, confirming the operation. Afterwards, the glass top (Ta') will lower straight over the area la, for about 15 minutes, the necessary period for the plate get cold and achieve the cleaning. This process is done for safety steps to avoid people burning after the plate use 1a.

If the user wants to use the plate la again, before the 15 minutes period, just activate the a key, the top (Ta') will raise automatically and the process will be re-started.

The top (Ta') can or not have its activating attached to a numeric code password, via programmer numeric keyboard 40 and than executed only by an authorized person. Another password can be put in the memory, if the user loses his authorized bracelet.

The top (Ta') have the ability to lowering after using the plate, but it is not used for grid 2 of the other burners 1, for security step, in this case the grid is made up of low thermic conduction material that cools rapidly after being heated by burners 1 flame.

The activating operation of required time, that was programmed in the numeric keyboard 40 and then choose the burner 1 that you want to use (it can be the oven 4) by the individual panel through P "under programming" key, so in the beginning, the flame detected by the flame F sensor will start the programmed time regressive count. If there is already flame in the burner 1 or 4 that you like to program the P key itself when programmed, activates the regressive count.

Time programming in the device with numeric keyboard 40: a) activate the time programmer key 41; b) choose the key H (hour), and than, push the required hour (for security step you can program 1, 2, 3 or 4 hour), the programmed hour will appear in the display 40'; c) choose M key (minutes) and than push from 1 to 60; the programmed minutes will appear in the display 40; d) choose S key (seconds) and than push from 1 to 60; the programmed seconds will appear also in the display 40'; after choosing time activate the programmer (PROG) key 48 and the choice will be frozen in the display 40; f) push P of the individual control panel 20, 20', that you want to program and right! In the display 22 and 22' of this panel will appear as the programmed time PT, as the regressive one RC, when you start the operation; g) after starting the operation, the "display" 40' of the numeric keyboard 40 returns to show the current hour; h) the timer programming operation can be restricted to minutes (M) key, zeroing automatically other parameters.

The programmer device 40 has also (MEMO) 47 and Cl 49 keys. The (MEMO) key is used to keep in the memory the programming one user will want to repeat when wishes. To do so after activating the (PROG) key that finishes the programming operation, push (MEMO) key and than its identifier number. For instance, MEMO 1. Everytime you want that programming again, just push MEMO 1, PROG and the programming will be available.

The CL key cancel the programming already done, if occurs a mistake in the programming operation.

To realize the ideal vapour percentage for preparing the food in the oven in programmer device 40: a) activate the vapour programmer key (%) 43; b) push the required vapour percentage via numeric keyboard (the amount is from 0-100, where 0 (zero) means the dry cooking and 100 (one hundred, the max. vapour percentage); c) push the (PROG) key and the display will show the chosen vapour percentage; d) when activating the P key of the oven, it means "under programming", automatically will lightening, indicating that the vapour programming is under operation, and it is impossible to open the oven door.

The food dehydration degree program occurs in the programmer device 40, as follow: a) activate the dehydration degree programmer G 42; b) the push "gram" amount, in the numeric keyboard, referring the weight limit that is going to loose during its preparation, and when this situation occurs the stove will switch off automatically or a new programming will start; c) activate the (PROG) key and their program will be frozen in the display of the programmer advice; d) the program is repassed to the required burner, activating the individual panel P key. The information about the losing weight limit will appear in the display of the chosen burner or oven panel. The programming starts as soon as the flame sensor detects flame in the burner that will be used.

Another way to program the dehydration degree is to program it by loosing weight percentual in relation to the real food weight (for instance: switch off the burner flame as soon as the food looses 8% of the initial weight). We use (%) key 43 after activating D key 42 and than, push, via numeric keyboard, the digit 8 and the (PROG) key.

Doing so the chosen burner of the operation will switch off as soon as the food weight, that is being heated, looses 8% of its initial weight.

The programming device 40 has also the function to program the food preparation, according to an adequate sequence of time, temperature, vapour, and dehydration degree parameter variation, just to obtain the best way to prepare it. This function is useful when we want, for instance, that a frozen dish firstly defrosts, than starts to roast in vapour and finally grill, with a more intense heating, dry, finishing the operation, switch off the burner because the food is ready to be tasted.

Therefore, according to (PROG) function, the dish or food mentioned could, for instance, be defrost during 15 minutes, in 50% percente of vapour, under 60°C temperature, and then roast during 40 minutes, in 90% vapour, under 130°C temperature and finally grill under 200°C, dry until the food loses 30g of its initial weight (initially 2k), all this process occurs automatically.

The variable programming parameter of (time, temperature and dehydration degree) is done activating the (PROG) key of the programmer 40 device and than the digit "1", indicating the first programming sequence of time, temperature, vapour, dehydration degree; then push (PROG) and the digit "1", to start the second programming sequence. The procedure is the same for the 3rd., 4th., 5th., as much sequence as is necessary. At the end, to repass the programming to one of the stove burners (or oven), activate P key of the chosen individual panel programming.

What was programmed would be activated as soon as the illuminated flame F symbol of the oven 20' or burners 20 is lightening indicating the flame operating. After the programming is finished, the individual lock L key will be activated, indicating the end of operation. All variables parameters of (time x temperature x vapour x dehydration degree) can be more easily programmed through a simple bar-code scanning system that have the parameters information, than after the optical pen scanning system the stove itself would program the referred parameters automatically.

This optical pen, not illustred, would be set inside a stove drawer 6 that is beside the oven door lock for manual openning. The referred drawer 6 would keep, besides optical pen for bar-code scanning system, bracelets used by users to operate the stove. The bracelet when set inside the drawer 6 is inhibited to work. The drawer 6 can or not have its opening linked to a numeric code password, via numeric keyboard 40, so, to enlarge the security oven opening only done by authorized person.

The bar-code that have information about the best way to prepare a specific food, would be attached to the "dish" package made by specialized company to supply this current invention users.

Information can be acquired in the "Control Individual Panel" 20 of the stove 10, burner 1, a) in the left side of the display 22 appears (RC) meaning regressive time count to have the flame extinguished (obs: the chronometer, when activated, also appears in its positiion); b) in the upper right side of the display 22 (PT) meaning programmed time in timer; c) burner 1 that can be the ingredients weight if correctly used the X and (To) keys; d) the detail button 23 when activated change information that is outlined in the centre of display 22 by another information, can be weight (RCH) (Regressive Chronometer), (PT) (Programmed Time), (CDD) (Current Dehydration Degree), (PDD) (Programmed Dehydration Degree), being the flame intensity the only one to be displayed via LEDs (analogical scale).

Information can be acquired in the "Control Individual Panel" 20: a) (RCHR) - Regressive Chronometer; b) (PT) - Programmed Time; c) (RT) - Real Temperature; d) (RdT) - Required Temperature; e) (CDD) - Current Dehydration Degree; f) (PDD) - Programmed Dehydration Degree; g) (VP) - Vapour Percentual; h) two accurate balance - one for the upper grid and the other for the lower grid; and i) analogical scale (LEDs) of the oven 4 internal temperature.

In this panel 20' there are two detail buttons 23' that change information that the user wants to have in evidence.

An "automatic programming" expression is noticed in the place 25' of the crystal liquid screen always when the oven is under the variable programming (time x temperature x vapour x dehydration degree).

Following, we will describe the most common situation and its corresponding interpretation and also the independent acting 10.

The nearness of the pan or bracelet's (or apron or necklace) user toward the stove, activate its frequency radio codes, joined with the pan "weight" over the grid 2 of the mouth, starts the combustion process in that burner 1.

This occurs as follows, after filling up the three conditions mentioned before, that is, weight over the grid and being an authorized utensil and user for the operation, when using bracelet (apron or necklace) the control 5 centre will activate the valves systems and the ignition system. So will be joining to the burner 1, the encounter of gas with electrical flash, occuring the combustion. The flame from it will be detected by the flame sensor, that will activate an illuminated panel F set in the individual control panel 20 indicating the flame presence.

To switch off the fire, take off the pan over the grid 2 of the burner 1, and the balance will return to zero and will activate the control centre 5, that will hinder the gas passage, through the valves system. Extinguishing the flame, the sensor will switch off the illuminated symbol F that indicates the flame presence. Resting a non authorized body over the grid 2 of one burner 1 (or a non authorized person to operate the stove), does not allow the flame activating because the nearness detector will blame that it is a non authorized object (or a non authorized person), avoiding so the ignition of the valves system activation of the control centre 5 and a beep tone or a voice synthesizer will be sound three times notifling the pretense user. At the same time a glass shield will raise from the frontal and sides of the burners table, as well as an illuminated button L of the individual lock will flash three times, after the lock system will be automatically activated for security reasons, keeping the L button illuminated.

When air circulation extinguishes the flame, the flame sensor note the lack of it making the control centre 5 activate the valves system hindering the gas exit and concomitantly a beep tone or a message voice systhetizer is sounded six times, besides making the flame F illuminated system flashes also for six times and then keep extinguished. After that, the individual lock system will be activated, for security reasons. To operate a pan outside the grid 2 of the burner 1 without extinguishing the flame, you need only to activate the delay D key of the individual control panel 20 that will be illuminated during its use. This D key that activates the delay system, defined by a time re-read, inhibits the balance system notify (lack of weight note) to the control centre 5 that will avoid the valves system hinder the gas outflow of that burner 1, avoiding the flame extintion for a certain period of time (about 5 minutes) sufficient to manipulate the food and after the time is finished if you don't want to restore the pan over the grid, the fire extinguishes. This function shouldn't be de-activated when you use this resource anymore.

When you want to prepare a food for a determined period of time (for instance, "water-bath" you use the numeric keyboard 40 - programmer device). This device where you can manipulate the time in hour, minutes and seconds is unique for each stove.

Afterwards choose the burner 1 (can also be the oven 4), to be used during the programmed time and in its individual panel 20 and 20' push the programming P key in the individual panel of the chosen control.

This action will appear a duplicity in the visor top of the individual panel 20 and 20'of the programmed time. The value of the left will keep set while the right one will zero in a regressive way. According to it, the user will have information about the pre-programmed time (PT) and how much time remains to finish the cooking (RC).

When the programmer device 40 is not being used, it will appear in the hour visor 40', the current hour, like a clock.

When after the cooking you want to keep the pan resting over the grid 2 of the burner 1 activate the individual control lock L key that will keep illuminated. This key will influence on the balance system, inhibiting the flame operating process, even in "weight" presence. So, that place will be inactive, until you run the function simply pushing the referred key.

When you only want to rest the pan over the grid 2 of the burner 1 with the lock activated, won't allow the flame action and will simply check the "weight" of its content.

To improve the use of the balance, the user must use the zero Z and totallizer (To) keys. If, for instance, the pan over the grid 2 is empty you will know the value. Activating the zero key this value disappear so any ingredient arranged inside the pan will have its "weight" checked and will be possible to use the zero Z key again for checking the next ingredient and so on.

At last you can use the totallizer (To) key to check the total weight.

When you want to eliminate the weight value of the totallizer to obtain only the weight of the ingredients together, you should, during the initial process of the pan balance, activate the totallizer key and than the zero, after that a beep tone will be sounded indicating the value referred to the pan is set in the memory and will not be considered in the final ingredients total. When you have to change the gas vessel, an illuminated symbol P in the master control 30 panel will switch on. This symbol is activated by a pressure sensor that detects the lack of required gas for a cooking programming prompt to start or pressure decrease in the main tube of gas supply, set between the vessel and the valves system. When you have street gas, the illuminated symbol P will indicate problems in the gas supply (low pressure).

When occurs the lack of commercial electric power supply an illuminated sumbol E set in the stove master panel 30 will switch on indicating the back-up energy entrance derived from battery 8, "no break" system, keeping without any prejudice the stove electric functions. After the return of the commercial power, the panel light will switch off as also the no break system, that will be rechanged automatically. To hinder the stove activating is necessary that the central lock Lc key of the master control panel 30 is activated. After activating the key above it will occur a completely gas supply hindering, and afterwards the lowering of the stove top and the electric energy bar to the electric components of the stove system. Visually you will know that the referred key is activated when there is a recalling "reward" of its surface in relation to other keys of the referred panel.

When you put the food inside the oven to roast, you should open oven door, rest the oven authorized utensil with food over the oven grid 4, and close the door, this procedure will make the oven burner flame be activated.

The flame activated procedure occurs in the following way: if you fill in the mentioned conditions and if the user is authorized through the transmitter bracelet (apron or necklace), the control centre 5 will activate the valves system and the ignition system. So, there will be, near the burner, the gas encounter with electric flash, occuring the combustion, occasion when the electric flash will cease. The flame resulting from this combustion will be detected by the flame sensor that will activate an illuminated symbol F in the individual control panel 20' indicating the flame presence.

The regulating of a specific oven temperature 4 to prepare certain food is obtained trough the use of the programmer 40 device with numeric keyboard.

When you want to realize a brief inspection how the cooking is going on, you should activate the delay D key that will guarantee the flame maintenance while you open the oven 4 door and manipulate the food inside; this key will keep the flame on for a certain period, after that, if you don't close the oven door the flame will be extinguished, activating the individual lock L system automatically.

When you want pre-heat the oven before its effectively use, is necessary to activate the pre-heating H key, that will be on. Through activating the pre-heating H key there will be the flame activating automatically for a certain period of time (about 10 minutes). The pre-heating temperature can also be pre-programmed via programmer device 40.

The pre-heating of the oven is hindered when you open the oven door.

The pre-heating function can only be used with empty oven (or it means zeroed balance).

The current invention was not elaborated exclusively to automatized stove gas (street or vessel) but also to automatized technological electrical stoves, as for electric resistance, as for incandescent resistance or via lamp irradiation of heat or magnetic induction. When it is aglow (incandescent) resistance, the P key of the master control panel 30, when switched on indicates pressure problems with gas supply, would be changed for RI, indicating problems in some aglow resistance.

When the burners individual lock L is activated, the electrical resistance "reward" inside the stove, far from the utensils in order the thermic inertia of this resistence, do not continue to heat the food that the user judges to be more necessary. For security reasons, it is always reward in relation to the stove after its use.

When it is heat irradiation lamp, the P key of the master control panel 30 could be changed by Li indicating problems in one of the stove lamps.

The irradiation lamps or the magnetic induction technology does not require other system changes, once they don't have thermic inertia to be switched off. Naturally the ignition system based on electric flashes, used in gas stove would be discharged in the electric stove.

The flame F symbols of the control panel would be changed by ON that means (in use). And the + and - key of flame intensity would activate a controller of their electric amperage, that would bow over the irradiation lamp controlling the heat delivering intensity. The current invention automates the use of external ventilator above the stove or coif (that have a set of coupled ventilator) when it switches on in the moment the flame sensor note any burner 1 of the stove in use (that is, the flame F detector activate the ventilator coupled to the system).

Preferably the ventilator activation would be done via FR (Frequency Radio) improving the wave emitters 3 device that is already over the stove table (the same nearness and user utensil identifier system); or alternativelly, by electric spinning.

The ventilator control panel 50 have four illuminated control key; one switch on ON 51; other switch off OFF 52; and other for automatic activation AUTO 53, that will switch on the ventilator when there is a flame in any of the burners and will switch off when there isn't; and finally a light switch LHT 54, that activate a light focus over the stove table, that can also be activated automatically according to the electric cell, that will order the activation or not of the referred light.

Still in this panel 50 there is a plub 55, a female connector type, that links the control centre 5 to an external electronic analyser to the stove, not illustrated, that has the function to analyse and obtain information of all the stove electronic devices, inside an operating activating, checking and verifing procedure. This resource is useful when you want to realize the corrective or provident maintenance in the systems, stove electro-mechanic function devices, in an automatic and fast way.

The control centre 5, when connected by plyg 55 to a modem and this one to a commercial telephone line allows the user after the identification password, to program and/or activated a stove (or oven) programming, aside. This resource is useful when, for instance, we want do start a food preparation, previously in the oven before going to work, and one hour before the lunch you start the operation by the office telephone, through a numeric code. When you arrive home to have your lunch, the dish will be ready, without wasting time.

In the same way when the control centre 5 is connected via plug to a frequency modem and this one to a commercial telephone line is possible to activate and realize checking and verifing operation of every stove device, aside, by the technical assistence team. This resource is useful when the technical assistance wants to check, aside, which problem the client's stove is having, as well as know, before the technical visit, which piece or component could be fixed or changed.

## Claims

1. Automatic control stove, comprising a support grid, burners, burners ignition, an oven, a timer, a light focus over the grid, and characterized in that it is provided with a basic flame operating system that allows the activation of a certain burner of the stove and/or oven when a pan is rested on the referred support grid and associated to the flame operating basic system, a sequence of integrated support subsystems, warning all the operation variants of the stove (10), these subsystems are arranged by: a flame sensor system (F); timer (41); a checking weight system of the food to be cooked (2); a nearness sensor system and an identifier (3) system of authorized users and utensils to use the stove (10); sound and/or visual alarming system; voice synthesizer system associated to other systems; an auxiliar feeding system by battery (8) no breaks; a pre-heating (H) of the oven (4); a variable programming system (48) of time x vapour x dehydration; bar-code scanning system for automatic programming of variables parameters time x temperature x vapour x dehydration; an automatic external exhauster operating system (50); and automatic light foccus operating system to protect the pans over the table, glass shield; automatic system to program vapour amount; automatic system indicating if the gas within the vessel is or not sufficient to start the programming; an atmospheric compensator system of variable programming time x temperature x vapour x dehydration.

2. Automatic control stove, according to claim 1, is characterized by each burner (1) of the plate (la) and oven (4) operated by individual control panels (20, 20', 20") electro-electronically linked to a control centre (5) built-in the cupboard (10) of the stove, operating all electro-mechanic devices that compose the stove (10).

3. Automatic control stove, according to claim 1, is characterized by each support grid (2) set over supports fitted to cargo cells that determines the exact weight of the utensil (or its content) over the grid (2).

4. Automatic control stove, according to claim 1, is characterized by a stove table (10) with a nearness sensor like a frequency radio transreceiver (3), that notes the nearness as plurality of frequency radio transmitters well fitted in the cooking utensiles and around the wrist as a bracelet or the neck as a necklace, or attached to the body fasten to the apron of the person authorized to operate the stove (10).

5. Automatic control stove, according to claim 1, is characterized by a valve system responsible by delivering gradually the gas to each separated burner (1), and this valve system is composed of two tubes with windows, each other built-in, the external tube is set and the internal one is movable and connected to a double way rotation electric engine axle, manipulated by an operating device composed of two keys (21, 21' 21") in counterpart provided of the respective individual control panel (20, 20', 20") with intensity demonstrative LEDs.

6. Automatic control stove, according to claim 1, is characterized by an auxiliar feeding system defined by a battery (8) that recharges after use.

7. Automatic control stove, according to any of claims from 1 to 5, is characterized by each individual control panel (20, 20') is composed of a digital visor (22, 22') with zero button (Z) and a totalizer (To), beyond information about food weight over the burner grid, pre-programmed time (PT) and regressive time count (RC), individual control lock (L), a detail button (23, 23') that change the information that is set in the display centre (22, 22') for a new one; a flame sensor button (F), and a button (P) that indicates the panel burner that must be "under programming" and delay button (D) that operates time re-read that delay the burners switch off operation in the lack of "weight" over the burners grid.

8. Automatic control stove, according to any of claims from 1 to 5, is characterized by a master control panel (30), connected to the control centre (5) that is shaped by the central lock button (Lc); one key that shows decrease in the pressure (P) and another key that shows emergency feeding (E) each one respectively and electrically connected to the stove electric and gas feeding (10); a solenoid valve placed before the valve system and battery no break (8).

9. Automatic control stove, according to claim 7, is characterized by a master control panel (30) with a digital visor (22') that shows information of "weight" for each support grid and a respective key numer or zero button (Z) and a totalizer (To): besides information as Required Temperature (RdT) ; Real Temperature (RT); Pre-Programmed Time (PT); Regressive Time Count (RC); Current Dehydration Degree (CDD); Programmed Dehydration Degree (PDD); Vapour Percentual (VP) and for panel (20'), besides a button (P) that indicates to be under programming, a delay button (D); a flame sensor button (F) and a individual lock button (L), like in the individual control of the stove burners (20), have also a control key of the stove internal light (LHT), a pre-heating control key (H), a grill key (G), responsible for the rotary spit operating, and a key (DOOR) to open the oven door (4) electrically and a vapour system key (V).

10. Automatic control stove, according to any of claims from 1 to 5, is characterized by a variable parameter programming system of time, temperature, vapour amount and food dehydration degree defined by a numerical keyboard (40), with a visor (40'), a key (41) referred to time programming, a key (42) referred to dehydration degree programming, a key referred to vapour amount programming that will be introduced during food preparation, a key (44) referred to temperature programming, besides keys referred to chronometer function (CHRO) ; clock (CLK) ; hour (H), minute (M), seconds (S); memory key (MEMO); that keep the advanced programming, a key (CL) to cancel the programming and at last (PROG) that operates the specified programming for on/off the stove burners, plate or oven.

11. Automatic control stove, according to claim 1, is characterized by two transparent tops (Tt, Tt') operated by central lock (Lc) to shift down closing the stove table (10) and open itself when the stove electro-electronic system is switched on (run central lock).

12. Automatic control stove, according to claim 1, is characterized by a plate (1a) near the stove table (10), provided with a unique control panel (20"), arranged by: key (ON) to switch on the flame; a bright key (F) to flame sensor; a key to switch on the single lock. Besides these keys, like the other individual control panels (20, 20'), the panel (20") presents a digital visor (22") that displays "weight" information with zero buttons (Z) and totalizer (To).

13. Automatic control stove, according to any of claims from 1 to 5, is characterized by an internal regulating temperature system of the oven (44) to be programmed via numeric keyboard (40), doing the system control automatically the flame intensity, flattening the internal real temperature (RT) of the oven with the required temperature (RdT).

14. Automatic control stove, according to claim 13, is characterized by a variable parameter programmer system (time x temperature x dehydration degree x vapour) to start via (PROG) 48) key of the numeric keyboard (40), so the system controls automatically, time programmer (41) and internal regulating oven temperature (44), food loosing weight checking function that control dehydration degree (42) and the function that regulates the vapour amount (43) to be introduced during the preparation of food, interacting each other within a required parameter sequence.

15. Automatic control stove, according to claims 1, 10, 13 and 14, is characterized by a foreseen optical system for bar-code scanning system or any other midia or storage system that uses data storage (procedure information), that has variable parameter information (time x temperature x dehydration degree x vapor degree) when read via optical pen (in the case of the scanning system) would program automatically the system, releasing the step by step programming via (PROG) key of the numeric keyboard (40).

16. Automatic control stove, according to claim 1, is characterized by an operating panel (50) of the stove external ventilator (or coif with coupling ventilator) to be composed of a key (ON) (51) to switch on the ventilator; a key (OFF) (52) to switch off; a key (AUTO) that operates the ventilator always the flame sensor (F) notes "flame" in one of the burners (1, la) over the stove table (10); a key (LHT) that switches on the light foccus straight over the burner table (1, la), this function can also be operated automatically always when the key (AUTO) is on, and when the light foccus operating over the stove will be controlled by a photo-electrical cell that is sensible to the decrease of environment light intensity; and a plug (55) female connector type, that interact the central control (5) of the stove to an "external analyser", for instance a "computer", in order to operate, act, check and/or verify the actual programming besides all systems functions and electro-mechanic devices of the stove, in a cautions and/or corrective maintenance procedure.

17. Automatic control stove, according to claim 4, is characterized by a glass protection of 20 cm size, built-in at start, appear in the side and frontal part of the stove table (10) protecting the utensils over the stove when a non-authorized person aproaches 30 cm toward the stove.

18. Automatic control stove, according to claim 1, is characterized by a system that measures if there is enough gas within the gas vessel, based on two devices: a manometer placed in the main tube entrance of the valves system and another consisting of an analytical balance, below the vessel that identifier how much weight (gas) the vessel has lost, this system property is to inform the user if there is the gas required to start the programming.

19. Automatic control stove, according to claim 1, is characterized by an atmospheric compensator system that fits the programming time x temperature x vapour x dehydration degree according to the current atmospheric conditions temperature, pressure and relative humidity of the air.

20. Automatic control stove, according to claim 1, is characterized by a control centre (5), when connected via plug (55), to a modem and this one to a commercial telephone line, allow the stove user, aside, through another telephone receiver, programs or starts the programming of the food preparation already inside the oven and/or over the grid of any burner.

21. Automatic control stove, according to claim 1, is characterized by a control centre (5), when connected via plug (55), to a modem and this one to a commercial telephone line, allow the technical assistance, aside, check, operate, act and verify all electronic and electro-mechanic devices of the stove, by a "external analyser" (for instance, a computer with appropriate software), placed in the border of another line or telephone receiver.

## Patentansprüche

1. Herd mit automatischer Steuerung mit einem Haltegitter, Brennem, Brennerzündung, einem Ofen, einem Timer, einem Lichtfokus über dem Gitter und **dadurch gekennzeichnet**, daß ein Grundsystem zum Flammenbetreiben, das die Aktivierung eines bestimmten Brenners des Herds und/oder des Ofens erlaubt, wenn ein Kochgeschirr auf das diesbezügliche Haltegitter abgestellt wird, und eine dem Grundsystem zum Flammenbetreiben zugehörige Reihe von integrierten, allen Betriebsvarianten des Herds (10) befehlenden Hilfs-Subsystemen vorgesehen sind, wobei diese Subsysteme sich aufgliedem in: ein Flammensensorsystem (F), einen Timer (41), ein System zur Überprüfung des Gewichts der zu kochenden Nahrung (2), ein Näherungssensor-System und ein System zum Identifizieren (3) von befugten Benutzem und Utensilien zur Verwendung des Herds (10), ein Ton- und/oder visuelles Alarmsystem, ein mit anderen Systemen verbundenes Stimmsynthesesystem, ein nicht-unterbrechbares Hilfsversorgungssystem mit Batterie (8), eine Vorheizung (H) des Ofens (4), ein variabel programmierbares System (48) für Zeit x Dampf x Dehydrierung, Strichcode-Leser zum automatischen Programmieren von variablen Parametem Zeit x Temperatur x Dampf x Dehydrierung, ein automatisches Steuersystem (50) für einen externen Absauger und ein automatisches Lichtfokus-Betriebssystem für den Schutz des Kochgeschirrs über der Auflage, Schutzglas, ein automatisches System zum Programmieren der Dampfmenge, ein automatisches System zur Angabe, ob das Gas im Behälter zum Starten des Programmablaufs ausreichend oder nicht ausreichend ist, und ein für Zeit x Temperatur x Dampf x Dehydrierung variabel programmierbares System zum Kompensieren von Atmosphärenbedingungen.

2. Herd mit automatischer Steuerung nach Anspruch 1, dadurch gekennzeichnet, daß jeder Brenner (1) der Platte (1a) und des Ofens (4) über individuelle Schaltflächen (20, 20', 20") bedienbar ist, die elektro-elektronisch mit einem in den Schrank (10) des Herds eingebauten Steuerzentrum (5) in Verbindung stehen, das alle elektro-mechanischen Einrichtungen, aus denen der Herd (10) besteht, betreibt.

3. Herd mit automatischer Steuerung nach Anspruch 1, dadurch gekennzeichnet, daß jedes Haltegitter (2) über Haltern aufsitzt, die an Lastzellen angepaßt sind, die das exakte Gewicht des Utensils (oder seines Inhalts) über dem Gitter (2) bestimmen.

4. Herd mit automatischer Steuerung nach Anspruch 1, gekennzeichnet durch eine Herdauflage (10) mit einem Näherungssensor, wie etwa einem Radiofrequenz-Sendeempfänger (3), der die Nähe als Vielzahl von Radiofrequenz-Sendern erfaßt, die gut in die Kochgeräte eingebaut sind und das Handgelenk, wie ein Armband, oder den Nacken, wie eine Halskette, umgeben oder am Körper der zum Bedienen des Herds (10) befugten Person, an der Schürze befestigt, angeordnet sind.

5. Herd mit automatischer Steuerung nach Anspruch 1, gekennzeichnet durch ein durch graduelles Zuführen des Gases zu jedem getrennten Brenner (1) reagierendes Ventilsystem, wobei dieses Ventilsystem aus zwei ineinander eingebauten, mit Schlitzen versehenen Rohren zusammensetzt ist, bei denen das äußere Rohr fest und das innere beweglich sowie mit einer Achse einer in zwei Richtungen rotierbaren elektrischen Maschine verbunden ist, die von einer Bedieneinrichtung bedient wird, welche aus zwei Tasten (21, 21', 21") besteht, die als Gegenstücke im entsprechenden individuellen Kontrollfeld (20, 20', 20") mit intensitätsanzeigenden LEDs vorgesehen sind.

6. Herd mit automatischer Steuerung nach Anspruch 1, gekennzeichnet durch ein Hilfsversorgungssystem, das durch eine sich nach Gebrauch wieder aufladende Batterie festgelegt wird.

7. Herd mit automatischer Steuerung nach einem der Ansprüche 1 bis 5, dadurch gekennzeichnet, daß jedes einzelne Kontrollfeld (20, 20') aus einem Digitalschirm (22, 22') mit Nulltaste (Z) und einem Totalisator (To), darüber hinaus einer Information über Nahrungsgewicht oberhalb des Brennergitters, einer vorprogrammierten Zeit (PT) und einer regressiven Zeitzählung (RC), einer individuellen Steuerverriegelung (L), einem Detailknopf (23, 23'), der die im Anzeigezentrum (22, 22') gesetzte Information gegen eine neue ändert, einem Flammensensorknopf (F) und einem Knopf (P), der auf dem Feld angibt, daß der Brenner "unter Programmierung" sein muß, sowie einem Verzögerungsknopf (D) besteht, der eine Zeitwiederauslesung für die Verzögerung veranlaßt, mit der die Brenner beim Fehlen von "Gewicht" auf dem Brennergitter ausschalten.

8. Herd mit automatischer Steuerung nach einem der Ansprüche 1 bis 5, gekennzeichnet durch ein Master-Kontrollfeld (30), das mit dem Steuerzentrum (5) verbunden ist, welches aus dem zentralen Verriegelungsknopf (Lc), einer die Abnahme des Drucks (P) anzeigenden Kennung sowie einer anderen, die Notzufuhr (E) anzeigenden Kennung, von denen jede jeweils elektrisch mit der elektrischen und der Gaszufuhr (10) des Herds verbunden ist, sowie aus einem vor dem Ventilsystem und der nicht-unterbrechbaren Batterie (8) plazierten Magnetventil gebildet wird.

9. Herd mit automatischer Steuerung nach Anspruch 7, gekennzeichnet durch ein Master-Kontrollfeld (30) mit einem Digitalschirm (22'), der Informationen über "Gewicht" für jedes Haltegitter und ein entsprechendes Kennungssymbol oder eine entsprechende Nulltaste (Z) und einen Totalisator (To) anzeigt: neben einer Information wie gewünschte Temperatur (RdT), echte Temperatur (RT), vorprogrammierte Zeit (PT), regressive Zeitzählung (RC), laufender Entfeuchtungsgrad (CDD), programmierter Entfeuchtungsgrad (PDD), Dampfprozentsatz (VP), und für das Kontrollfeld (20'), neben einem den programmierten Ablauf anzeigenden Knopf (P), einen Verzögerungsschaltknopf (D), einen FlammensensorSchaltknopf (F) und einen individuellen Verriegelungsschaltknopf (L) zeigt, wie bei der individuellen Steuerung der Herdbrenner (20), bei denen ebenfalls eine Steuerungstaste für das herdinteme Licht (LHT), eine Vorheizungs-Steuertaste (H), eine für den Drehspieß verantwortliche Grilltaste (G), eine Taste (TÜR) zum elektrischen Öffnen der Ofentür (4) und eine Dampfsystem-Taste (V) vorgesehen sind.

10. Herd mit automatischer Steuerung nach einem der Ansprüche 1 bis 5, gekennzeichnet durch ein für variable Parameter programmierbares System für Zeit, Temperatur, Dampfmenge und Nahrungsentfeuchtungsgrad, das durch eine numerische Tastatur (40) bestimmt wird, mit einem Schirm (40'), einer Taste (41) für das Programmieren der Zeit, einer Taste (42) für das Programmieren des Entfeuchtungsgrades, einer Taste für das Programmieren der Dampfmenge, die während der Nahrungszubereitung eingesetzt werden wird, einer Taste (44) für das Programmieren der Temperatur, und daneben mit Tasten für die Zeitmeß-Funktion (CHRO), die Uhr (UHR), die Stunde (H), die Minute (M), die Sekunden (S), einer Speichertaste (MEMO), die die fortschreitende Programmierung beibehält, einer Taste (CL), um die Programmierung aufzuheben, und schließlich (PROG), das die spezifische Programmierung für das An- und Ausschalten der Herdbrenner, der Platte oder des Ofens bedient.

11. Herd mit automatischer Steuerung nach Anspruch 1, gekennzeichnet durch zwei transparente Deckteile (Tt, Tt'), die durch eine Zentralverriegelung (Lc) betätigbar sind, um zum Verschließen der Herdauflage (10) nach unten zu laufen und um diese selbsttätig zu öffnen, wenn das elektro-elektronische System des Herds eingeschaltet wird (Programmablauf-Zentralverschluß).

12. Herd mit automatischer Steuerung nach Anspruch 1, gekennzeichnet durch eine Platte (1a) in der Nähe der Herdauflage (10), die mit einem einzigen Kontrollfeld (20") versehen ist, das eine Taste (ON), um die Flamme einzuschalten, eine Helligkeitstaste (F) zum Flammensensor und eine Taste zum Einschalten der Einzelverriegelung aufweist. Außer diesen Tasten weist das Kontrollfeld (20"), wie die anderen einzelnen Kontrollfelder (20, 20'), noch einen Digitalschirm (22") zur Anzeige von "Gewichts"-informationen mit Nulltasten (Z) und Totalisator (To) auf.

13. Herd mit automatischer Steuerung nach einem der Ansprüche 1 bis 5, gekennzeichnet durch ein internes Temperatur-Regelsystem für den Ofen (44), das über eine numerische Tastatur (40) programmierbar ist, wodurch das System automatisch die Flammenintensität durch Ausgleich der internen Echt-Temperatur (RT) des Ofens mit der gewünschten Temperatur (RdT) steuert.

14. Herd mit automatischer Steuerung nach Anspruch 13, gekennzeichnet durch ein variable Parameter programmierendes System (Zeit x Temperatur x Entfeuchtungsgrad x Dampf), das über die Taste (PROG) 48) der numerischen Tastatur (40) startbar ist, wobei das System, durch Zeitprogrammierer (41) und eine interne Ofentemperaturregelung (44), eine Nahrungsgewichtsverlust-Kontroll-Funktion, die den Enffeuchtungsgrad (42) steuert, und die Funktion automatisch regelt, welche die Dampfmenge (43) steuert, die während der Nahrungszubereitung eingeführt werden soll, wobei sich diese Parameter innerhalb einer erforderlichen Parameter-Sequenz gegenseitig beeinflussen.

15. Herd mit automatischer Steuerung nach den Ansprüchen 1, 10, 13 und 14, gekennzeichnet durch ein vorgesehenes optisches Strichcode-Scansystem oder irgendein anderes Medium oder Speichersystem, das eine Datenspeicherung (Ablaufinformation) verwendet, das Informationen über veränderliche Parameter (Zeit x Temperatur x Entfeuchtungsgrad x Dampfgrad) aufweist, das beim Lesen über einen optischen Stift (im Fall des Scansystems) das System automatisch programmieren würde, wobei die Schritt-für-Schritt-Programmierung über (PROG)-Taste der numerischen Tastatur (40) freigegeben wird.

16. Herd mit automatischer Steuerung nach Anspruch 1, gekennzeichnet durch ein Bedienungsfeld (50) für den externen Herd-Ventilator (oder eine Kappe mit Kopplungs-Ventilator) mit einer Einschalttaste (ON) (51) zum Einschalten des Ventilators, einer Taste (OFF) (52) zum Ausschalten, einer Taste (AUTO), die den Ventilator immer dann betreibt, wenn der Flammensensor (F) über der Herdauflage (10) bei einem der Brenner (1, 1a) eine "Flamme" registriert, eine Taste (LHT), die den Lichtfleck direkt über der Brennerauflage (1, 1a) einschaltet - diese Funktion kann, immer wenn die Taste (AUTO) eingeschaltet ist und wenn der über dem Herd wirkende Lichtfleck durch eine auf den Abfall der umgebenden Lichtintensität empfindliche Zelle gesteuert wird, auch automatisch ausgeführt werden - und einen Stecker (55) des weiblichen Verbindertyps, der mit dem Steuerzentrum (5) des Herds auf einen externen Analysator hin welchselwirkt, beispielsweise einen "Computer", um die aktuelle Programmierung neben allen Systemfunktionen und elektro-mechanischen Einrichtungen des Herds in einer Wartungsprozedur als Vorsichtsmaßnahme und/oder als Abhilfemaßnahme zu betreiben, durchzuführen, zu überprüfen und/oder zu verifizieren.

17. Herd mit automatischer Steuerung nach Anspruch 4, gekennzeichnet durch einen bei Beginn eingebauten Glasschutz von 20 cm Größe, der seitlich und frontal zur Herdauflage (10) erscheint, zum Schutz der Utensilien auf dem Herd, wenn sich eine unbefugte Person dem Herd auf 30 cm nähert.

18. Herd mit automatischer Steuerung nach Anspruch 1, gekennzeichnet durch ein System, das mißt, ob genug Gas innerhalb des Gasbehälters vorliegt, und das auf zwei Einrichtungen basiert: ein im Einlaß der Hauptleitung des Ventilsystems angeordnetes Manometer und eine andere aus einer analytischen Waage bestehende, unterhalb des Behälters angebrachte Einrichtung, die feststellt, wieviel Gasgewicht der Behälter verloren hat, wobei diese Systemeigenschaft zur Information des Benutzers darüber dient, wenn das für das Starten des Programmierablaufs erforderliche Gas vorhanden ist.

19. Herd mit automatischer Steuerung nach Anspruch 1, gekennzeichnet durch ein atmosphärisches Ausgleichssystem, das die Programmierung Zeit x Temperatur x Gas x Entfeuchtungsgrad entsprechend den vorhandenen atmosphärischen Bedingungen Temperatur, Druck und relative Luftfeuchtigkeit anpaßt.

20. Herd mit automatischer Steuerung nach Anspruch 1, gekennzeichnet durch ein Steuerzentrum (5), das es bei Anschluß über einen Stecker (55) an ein Modem und dessen Anschluß an eine handelsübliche Telefonleitung gestattet, daß der Benutzer des Herdes woanders über einen anderen Telefonhörer die Zubereitung der schon im Ofen und/oder über dem Gitter eines Brenners befindlichen Nahrung programmiert oder deren Programmierung startet.

21. Herd mit automatischer Steuerung nach Anspruch 1, gekennzeichnet durch ein Steuerzentrum (5), das es bei Anschluß über einen Stecker (55) an ein Modem und dessen Anschluß an eine handelsübliche Telefonleitung gestattet, daß der technische Kundendienst woanders alle elektronischen und elektro-mechanischen Geräte der Herds über einen "externen Analysator" (beispielsweise einen Computer mit geeigneter Software), der am Ende einer anderen Leitung oder einen Telefonhörer angeschlossen ist, durchtestet, betreibt, auf sie einwirkt oder sie verifiziert.

## Revendications

1. Cuisinière à commande automatique, comportant une grille de support, des brûleurs, un dispositif d'allumage de brûleurs, un four, une minuterie, un foyer lumineux au-dessus de la grille, caractérisée en ce qu'elle est pourvue d'un système fondamental de commande de flamme qui permet l'activation d'un certain brûleur de la cuisinière et/ou du four lorsqu'un plat est posé sur la grille de support indiqué et est associé au système fondamental de commande de flamme, une suite de sous-ensembles de support intégré, informant de toutes les variantes d'opérations de la cuisinière (10), l'agencement de ces sous-ensembles étant constitué par : un système capteur de flamme (F) ; une minuterie (41) ; un système de contrôle de poids de l'aliment devant être cuit (2) ; un système capteur de proximité et un système identificateur (3) d'utilisateurs autorisés et d'ustensiles pour l'utilisation de la cuisinière (10) ; un système d'alarme sonore et/ou visuelle ; un système synthétiseur vocal associé à d'autres systèmes ; un système d'alimentation auxiliaire par batterie (8) en cas de coupure d'alimentation ; un préchauffage (H) du four (4) ; un système de programmation variable (48) de temps x vapeur x déshydratation ; un système de balayage de code à barre pour la programmation automatique de paramètres variables, temps x température x vapeur x déshydratation ; un système de commande automatique (50) d'un extracteur extérieur ; et un système de commande automatique de foyer lumineux pour protéger les plats au-dessus de la table, écran de verre ; un système automatique pour programmer la quantité de vapeur ; un système automatique indiquant si le gaz à l'intérieur du récipient est suffisant ou non pour commencer la programmation ; un système compensateur atmosphérique de programmation variable, temps x température x vapeur x déshydratation.

2. Cuisinière à commande automatique selon la revendication 1, caractérisée en ce que chaque brûleur (1) de la plaque (1a) et le four (4) sont commandés par des panneaux de commande individuels (20, 20', 20") en liaison électro-électronique avec un centre de commande (5) incorporé dans le carter (10) de la cuisinière, commandant tous les dispositifs électromécaniques qui composent la cuisinière (10).

3. Cuisinière à commande automatique selon la revendication 1, caractérisée en ce que chaque grille (2) de support est placée au-dessus de supports ajustés à des cellules de charge qui déterminent le poids exact de l'ustensile (ou de son contenu) reposant sur la grille (2).

4. Cuisinière à commande automatique selon la revendication 1, caractérisée par une table (10) de cuisinière pourvue d'un capteur de proximité analogue à un émetteur-récepteur radiofréquence (3), qui indique la proximité sous la forme de plusieurs émetteurs radiofréquences bien adaptés aux ustensiles de cuisson et entourant le poignet, à la manière d'un bracelet, ou le cou, à la manière d'un collier, ou fixés au corps, au tablier, de la personne autorisée à faire fonctionner la cuisinière (10).

5. Cuisinière à commande automatique selon la revendication 1, caractérisée par un système de valve qui réagit en délivrant progressivement le gaz à chaque brûleur séparé (1), et ce système de valve est composé de deux tubes pourvus de fenêtres, mutuellement incorporés, le tube extérieur étant fixe et le tube intérieur étant mobile et raccordé à un arbre de moteur électrique tournant dans les deux sens, manoeuvré par un dispositif de commande composé de deux touches (21, 21', 21") dans une contre-partie formée du panneau de commande individuel respectif (20, 20', 20") pourvu de DEL d'indication d'intensité.

6. Cuisinière à commande automatique selon la revendication 1, caractérisée par un système d'alimentation auxiliaire défini par une batterie (8) qui se recharge après l'utilisation.

7. Cuisinière à commande automatique selon l'une quelconque des revendications 1 à 5, caractérisée en ce que chaque panneau de commande individuel (20, 20') est composé d'un visualisateur numérique (22, 22') pourvu d'un bouton 0 (Z) et d'un totalisateur (To), en plus d'une information concernant le poids d'aliment sur la grille du brûleur, un temps préprogrammé (PT) et un décomptage de temps (RC), un verrou de commande individuel (L), un bouton de détail (23, 23') qui remplace l'information qui est établie dans le centre d'affichage (22, 22') par une nouvelle information ; un bouton (F) de capteur de flamme, et un bouton (P) qui indique sur le panneau que le brûleur doit être en "programmation" et un bouton de retard (D) qui actionne une relecture de temps retardant l'opération d'extinction des brûleurs par manque de "poids" sur la grille des brûleurs.

8. Cuisinière à commande automatique selon l'une quelconque des revendications 1 à 5, caractérisée par un panneau (30) de commande principale connecté au centre de commande (5) qui est configuré par le bouton de verrou central (Lc) ; une touche qui indique une baisse de la pression (P) et une autre touche qui indique une alimentation d'urgence (E), chacune étant respectivement et électriquement connectée à l'alimentation électrique et gazeuse de la cuisinière (10) ; une électrovalve placée avant le système de valve et la batterie de secours (8).

9. Cuisinière à commande automatique selon la revendication 7, caractérisée par un panneau (30) de commande principale pourvu d'un visualisateur numérique (22') qui montre une information de "poids" pour chaque grille de support et un numéro de touche respectif ou un bouton 0 (Z) et un totalisateur (To) ; en outre une information telle que Température Demandée (RdT) ; Température Réelle (RT) ; Température Préprogrammée (PT) ; Décomptage de Temps (RC) ; Degré de Déshydratation en cours (CDD) ; Degré de Déshydratation Programmé (PDD) ; Pourcentage de Vapeur (Vp) et, pour le panneau (20'), en outre un bouton (P) qui indique une programmation, un bouton de retard (D) ; un bouton (F) de capteur de flamme et un bouton de verrou individuel (L), comme dans la commande individuelle des brûleurs (20) de la cuisinière, comprennent aussi une touche de commande de l'éclairage intérieur (LHT) de la cuisinière, une touche (H) de commande de préchauffage, une touche (G) de grill, réagissant à la commande de la broche tournante, et une touche (PORTE) pour ouvrir la porte (4) du four électriquement et une touche (V) de système de vapeur.

10. Cuisinière à commande automatique selon l'une quelconque des revendications 1 à 5, caractérisée par un système de programmation de paramètres variables de temps, de température, de quantité de vapeur et de degré de déshydratation d'aliment définis par un clavier numérique (40), avec un visualisateur (40'), une touche (41) affectée à une programmation de temps, une touche (42) affectée à une programmation de degré de déshydratation, une touche affectée à une programmation de quantité de vapeur qui sera introduite pendant la préparation de l'aliment, une touche (44) affectée à une programmation de température, en plus de touches affectées à une fonction de chronomètre (CHRO) ; une horloge (CLK) ; heures (H), minutes (M), secondes (S) ; une touche de mémoire (MEMO), qui maintiennent la progression de la programmation, une touche (CL) pour annuler la programmation et enfin (PROG) qui active la programmation spécifiée pour la mise en marche/l'arrêt des brûleurs de la cuisinière, de la plaque ou du four.

11. Cuisinière à commande automatique selon la revendication 1, caractérisée par deux dessus transparents (Tt, Tt') actionnés par un verrou central (Lc) pour se refermer en descendant sur la table (10) de la cuisinière et s'ouvrir automatiquement lorsque le système électro-électronique de la cuisinière est commuté en circuit (verrou central de marche).

12. Cuisinière à commande automatique selon la revendication 1, caractérisée par une plaque (1a) proche de la table (10) de la cuisinière, pourvue d'un panneau de commande unique (20") dont l'agencement est constitué par : une touche (EN) pour établir la flamme ; une touche (F) de luminosité pour un capteur de flamme ; une touche pour activer le verrou unique et, en plus de ces touches, de même que les autres panneaux individuels de commande (20, 20'), le panneau (20") présentant un visualisateur numérique (22") qui affiche une information de "poids" avec des boutons 0 (Z) et un totalisateur (To).

13. Cuisinière à commande automatique selon l'une quelconque des revendications 1 à 5, caractérisée par un système interne de régulation de température du four (44) destiné à être programmé par l'intermédiaire d'un clavier numérique (40), amenant le système à régler automatiquement l'intensité de la flamme, aplanissant la température réelle interne (RT) du four conformément à la température demandée (RdT).

14. Cuisinière à commande automatique selon la revendication 13, caractérisée par un système programmateur de paramètres variables, temps x température x degré de déshydratation x vapeur, destiné à être déclenché par l'intermédiaire d'une touche (PROG) (48) du clavier numérique (40), afin que le système effectue une commande automatique, un programmateur de temps (41) et une régulation interne de la température du four (44), en fonction de contrôle de perte de poids d'aliment qui règle le degré de déshydratation (42) et la fonction qui régule la quantité de vapeur (43) devant être introduite pendant la préparation de l'aliment, interagissant entre elle dans une séquence de paramètres demandée.

15. Cuisinière à commande automatique selon les revendications 1, 10, 13 et 14, caractérisée par un système optique de prévision pour un système de balayage de code à bar ou tout autre milieu ou un système de stockage qui utilise le stockage de données, informations de procédure, qui possède une information de paramètres variables, temps x température x degré de déshydratation x degré de vapeur, lorsqu'il est lu au moyen d'un crayon optique, dans le cas du système de balayage, qui programmerait automatiquement le système, déclenchant la programmation étape par étape par l'intermédiaire d'une touche (PROG) du clavier numérique (40).

16. Cuisine à commande automatique selon la revendication 1, caractérisée par un panneau de commande (50) du ventilateur extérieur de la cuisinière (ou coiffe accouplée à un ventilateur) devant être composé d'une touche (EN) (51) pour mettre en marche le ventilateur ; d'une touche (HORS) (52) pour l'arrêt ; une touche (AUTO) qui commande le ventilateur de façon constante lorsque le capteur de flamme (F) indique "flamme" dans l'un des brûleurs (1, 1a) sur la table de la cuisinière (10) ; d'une touche (LHT) qui allume le foyer lumineux directement au-dessus de la table de brûleurs (1, 1a), cette fonction pouvant également être exécutée automatiquement de façon constante lorsque la touche (AUTO) est activée, et lorsque le foyer lumineux agissant sur la cuisinière est commandé par une cellule photoélectrique qui est sensible à la baisse de l'intensité lumineuse ambiante ; et une fiche (55) du type connecteur femelle qui interagit avec la commande centrale (5) de la cuisinière vers un "analyseur extérieur", par exemple un "ordinateur", pour commander, activer, contrôler et/ou vérifier la programmation réelle en plus de toutes les fonctions du système et des dispositifs électromécaniques de la cuisinière, dans une procédure de précautions et/ou de maintenance corrective.

17. Cuisinière à commande automatique selon la revendication 4, caractérisée par une protection de verre de 20 cm de dimension, incorporée au départ, apparaissant dans le côté et la partie frontale de la table (10) de la cuisinière, protégeant les ustensiles sur la cuisinière lorsqu'une personne non autorisée approche à 30 cm de la cuisinière.

18. Cuisinière à commande automatique selon la revendication 1, caractérisée par un système qui mesure s'il y a suffisamment de gaz dans la bouteille de gaz, sur la base de deux dispositifs : un manomètre placé dans l'entrée du tube principal du système de valves et un autre constitué d'une balance analytique, au-dessous de la bouteille, qui identifie combien de poids (de gaz) la bouteille a perdu, cette propriété du système étant destinée à informer l'utilisateur pour qu'il sache s'il y a le gaz demandé pour commencer la programmation.

19. Cuisinière à commande automatique selon la revendication 1, caractérisée par un système compensateur atmosphérique qui ajuste la programmation temps x température x vapeur x degré de déshydratation aux conditions atmosphériques en cours, température, pression et humidité relative de l'air.

20. Cuisinière à commande automatique selon la revendication 1, caractérisée par un centre de commande (5), lorsqu'il est connecté par une fiche (55), à un modem et celui-ci a une ligne téléphonique commerciale, qui permet à l'utilisateur de la cuisinière, à l'écart, de programmer ou de déclencher la programmation de la préparation d'aliment se trouvant déjà à l'intérieur du four et/ou sur la grille de tout brûleur, par l'intermédiaire d'un autre récepteur téléphonique.

21. Cuisinière à commande automatique selon la revendication 1, caractérisée par un centre de commande (5) qui, lorsqu'il est connecté par une fiche (55), à un modem et celui-ci à une ligne téléphonique, permet à l'assistance technique, à l'écart, de contrôler, commander, agir et vérifier tous les dispositifs électroniques et électro-mécaniques de la cuisinière, au moyen d'un "analyseur extérieur", par exemple un ordinateur ayant un logiciel approprié, placé au bout d'une autre ligne ou à un récepteur téléphonique.
